# EUROPÄISCHE PATENTANMELDUNG

(11) **EP 0 986 243 A1**
(43) Veröffentlichungstag der Anmeldung: **15.03.2000**
(21) Anmeldenummer: 98116956.8
(22) Anmeldetag: 08.09.1998
(51) Int. Cl.: H04N 1/195

(54) **Verfahren und Vorrichtung zur Herstellung eines fotografischen Bilds**

(71) Anmelder: GRETAG IMAGING AG, CH-8105 Regensdorf (CH)
(72) Erfinder: Frick, Beat, 8107 Buchs (CH); Fenner, Jürg, 8600 Dübendorf (CH)
(74) Vertreter: Schwabe - Sandmair - Marx

(57) **Zusammenfassung**

Für die Herstellung eines fotografischen Bilds von einer in elektronischer Form vorliegenden Vorlage werden mittels eines elektrooptischen, pixelweise arbeitenden Wandlerorgans (3) nacheinander von wechselnden streifenförmigen Abschnitten der Vorlage optische Darstellungen (D) erzeugt und diese optischen Darstellungen (D) in einem streifenförmigen Belichtungsbereich (E) auf das Kopiermaterial (P) abgebildet, wobei der streifenförmige Belichtungsbereich (E) und das Kopiermaterial (P) im wesentlichen mit konstanter Geschwindigkeit in Richtung quer zur Längserstreckung des streifenförmigen Belichtungsbereichs (E) relativ zu einander bewegt werden, so dass sukzessive die Bildinformation der ganzen Vorlage auf die gesamte zur Verfügung stehende Fläche des Kopiermaterials (P) aufbelichtet wird. Jeder streifenförmige Abschnitt der Vorlage wird dabei in mindestens zwei in Längsrichtung des Abschnitts hintereinander liegende streifenförmige Teilabschnitte eingeteilt, von den Teilabschnitten werden mittels des elektrooptischen Wandlerorgans (3) getrennte optische Darstellungen erzeugt und diese getrennten optischen Darstellungen der Teilabschnitte werden in mindestens zwei in Längsrichtung hintereinander liegenden streifenförmigen, zusammen den streifenförmigen Belichtungsbereich (E) bildenden Teilbelichtungsbereichen (E1,E2) auf das Kopiermaterial (P) abgebildet. Als elektrooptisches Wandlerorgan (3) wird vorzugsweise ein digitales Mikrospiegelfeld eingesetzt. Auf diese Weise lassen sich mit relativ geringem konstruktiven Aufwand unter Einsatz von handelsüblichen Wandlerorganen auch grossformatige fotografische Bilder mit hoher Qualität herstellen.

## Beschreibung

Die Erfindung betrifft ein Verfahren und eine Vorrichtung zur Herstellung eines fotografischen Bilds, speziell einer Kopie von einer in elektronischer Form vorliegenden Vorlage durch streifenweises Aufbelichten der Bildinformation der Vorlage auf ein fotografisches Kopiermaterial gemäss den Oberbegriffen der unabhängigen Ansprüche.

Digitale Bilderzeugungsgeräte auf fotografischer Basis, sogenannte digitale fotografische Printer, erzeugen Bilder bzw. Kopien durch Aufbelichten der Bildinformation der zugrundeliegenden, in elektronisch gespeicherter Form vorliegenden Vorlage auf ein fotoempfindliches Kopiermaterial. Eine Möglichkeit dafür besteht darin, die Bildinformation der Vorlage mittels eines geeigneten elektrooptischen, pixelweise arbeitenden Wandlerorgans bildmässig optisch darzustellen, also eine optische Darstellung der Vorlage zu erzeugen, und diese optische Darstellung der Vorlage auf das Kopiermaterial abzubilden und damit aufzubelichten. Als elektrooptisches Wandlerorgan kommen dabei sowohl aktive (selbstleuchtende) als auch passive (modulierende) elektrooptische Anordnungen in Frage; typische Beispiele sind Katodenstrahlröhren, in Transmission oder Reflexion betriebene Flüssigkristallzellenfelder, Leuchtdiodenfelder, Elektroluminiszenzzellenfelder und neuerdings auch sog. digitale Mikrospiegelfelder.

Mit ein entscheidender Faktor für die Qualität der auf diese Weise erzeugten fotografischen Bilder bzw. Kopien ist die Auflösung (Pixelanzahl) des eingesetzten elektrooptischen Wandlerorgans. Während ausreichend hochauflösende kleinere Wandlerorgane zu wirtschaftlich vertretbaren Preisen verfügbar sind, steht die Entwicklung von wirtschaftlich herstellbaren und kommerziell einsetzbaren grossflächigen Wandlerorganen entsprechender Auflösung noch in den Anfängen. Mit den erhältlichen Wandlerorganen können daher nur relativ kleinformatige Bilder mit befriedigender Qualität hergestellt werden.

Durch zeilen- bzw. streifenweise Aufbelichtung lassen sich in Richtung quer zu den Zeilen bzw. Streifen theoretisch beliebig grosse fotografische Bilder herstellen.

Hierbei werden nacheinander jeweils nur streifenförmige, in ihrer Längsrichtung die gesamte Vorlage abdeckende Abschnitte der Vorlage mittels des Wandlerorgans optisch dargestellt und nacheinander in entsprechender räumlicher Zuordnung auf das Kopiermaterial aufbelichtet. Die korrekte räumliche Anordnung der aufbelichteten Streifen wird dabei durch relative Versetzung des Kopiermaterials zum Belichtungsstrahlengang bewirkt. Letzteres kann durch einen Vorschub des Kopiermaterials oder durch eine entsprechend bewegliche Abbildungsoptik erreicht werden. Die Relativversetzung erfolgt natürlich synchron mit dem Wechsel der dargestellten Streifen der Vorlage. Falls die Streifen mehrere Zeilen breit sind, können sich die benachbarten Streifen auch überlappen. Da dabei das Kopiermaterial je nach Überlappungsgrad mehrfach belichtet wird, muss dies bei der Bemessung der Kopierlichtmenge bei den einzelnen Belichtungsschritten entsprechend berücksichtigt werden. Dieses Belichtungsverfahren ist unter der Bezeichnung TIG (Time Integration Grayscale) allgemein bekannt.

Für dieses Verfahren der zeilen- bzw. streifenweisen Aufbelichtung lassen sich vergleichsweise günstige lineare Wandlerorgane einsetzen. Darunter werden rechteckige Wandlerelement-Anordnungen (Felder) verstanden, deren Breite deutlich kleiner als die Länge klein ist. Im Extremfall besitzt ein solches lineares Wandlerorgan nur eine einzige Reihe (Zeile) von Wandlerelementen, typischerweise jedoch bis zu mehreren hundert Reihen. In Längsrichtung (pro Reihe bzw. Zeile) besitzt ein solches lineares Wandlerorgan dagegen typischerweise tausend und mehr Wandlerelemente. Selbstverständlich können auch breitere Wandlerorgane (mit höherer Reihenanzahl) eingesetzt werden, wobei nicht alle Reihen (d.h. nicht die volle Breite) ausgenutzt werden müssen.

Mit den vorstehend beschriebenen Methoden lassen sich unter Einsatz der handelsüblichen Wandlerorgane qualitativ befriedigende fotografische Bilder nur dann herstellen, wenn das Format des herzustellenden Bilds in Längsrichtung der aufbelichteten Streifen relativ Mein ist. Für auch in der anderen Dimension grössere Bildformate reicht die Auflösung der handelsüblichen und wirtschaftlich vertretbaren Wandlerorgane jedoch in vielen Fällen nicht aus.

Durch die vorliegende Erfindung sollen nun ein Verfahren und eine Vorrichtung der gattungsgemässen Art dahingehend verbessert werden, dass ohne grossen zusätzlichen technischen Aufwand auch grösserformatige Bilder in befriedigender Qualität auf wirtschaftliche Weise herstellbar sind. Insbesondere soll dies unter Einsatz handelsüblicher und wirtschaftlich vertretbarer Wandlerorgane möglich sein, d.h. es sollen dazu keine speziellen, höherauflösenden bzw. grösseren und entsprechend teureren Wandlerorgane erforderlich sein.

Die Lösung dieser der Erfindung zugrundeliegenden Aufgabe ergibt sich aus den im kennzeichnenden Teil der unabhängigen Ansprüche beschriebenen Merkmalen des erfindungsgemässen Verfahrens und der erfindungsgemässen Vorrichtung.

Gemäss dem Hauptgedanken der Erfindung wird also die Auflösung des erzeugten fotografischen Bilds durch eine Längenunterteilung der einzelnen streifenförmigen Abschnitte der Vorlage in zwei oder mehrere Teilabschnitte und durch eine entsprechende stückweise Aufbelichtung erreicht. Da hierbei die volle Länge des Wandlerorgans jeweils nur für die Darstellung eines Teilabschnitts ausgenützt wird, ergibt sich - in Längsrichtung der Streifen - entsprechend der Anzahl Teilabschnitte eine Verdopplung bzw. Vervielfachung der Auflösung, so dass auch mit herkömmlichen Wandlerorganen sehr grossformatige Bilder mit befriedigender Qualität erzeugt werden können.

Weitere vorteilhafte und besonders zweckmässige Ausgestaltungen des erfindungsgemässen Verfahrens und der erfindungsgemässen Vorrichtung sind in den abhängigen Ansprüchen beschrieben.

Im folgenden wird die Erfindung anhand der Zeichnung näher erläutert. Es zeigen:
- Fig.1-3: drei schematische Skizzen zur Erläuterung des im erfindungsgemässen Verfahren eingesetzten Prinzips der streifenförmigen Belichtung,
- Fig. 4-5: zwei schematische Skizzen zur Erläuterung eines ersten Ausführungsbeispiels des erfindungsgemässen Verfahrens,
- Fig. 6: eine schematische Skizze zur Erläuterung eines zweiten Ausführungsbeispiels des erfindungsgemässen Verfahrens,
- Fig. 7: eine schematische Skizze eines ersten Ausführungsbeispiels der erfindungsgemässen Vorrichtung,
- Fig. 8: eine schematische Darstellung einer zweckmässigen Ausführungsform einer für die Vorrichtung geeigneten Abbildungsoptik,
- Fig. 9-10: zwei schematische Skizzen zur Erläuterung der Relativbewegung zwischen Kopiermaterial und Belichtungsstreifen,
- Fig. 11-12: zwei schematische Skizzen zur Erläuterung einer beispielsweisen Verstellmöglichkeit für den Vergrösserungsmassstab und
- Fig. 13: eine Teilansicht der erfindungsgemässen Vorrichtung zur Erläuterung der mechanischen Realisierung der Relativbewegung zwischen Kopiermaterial und Belichtungsstreifen analog den Figuren 9-10.

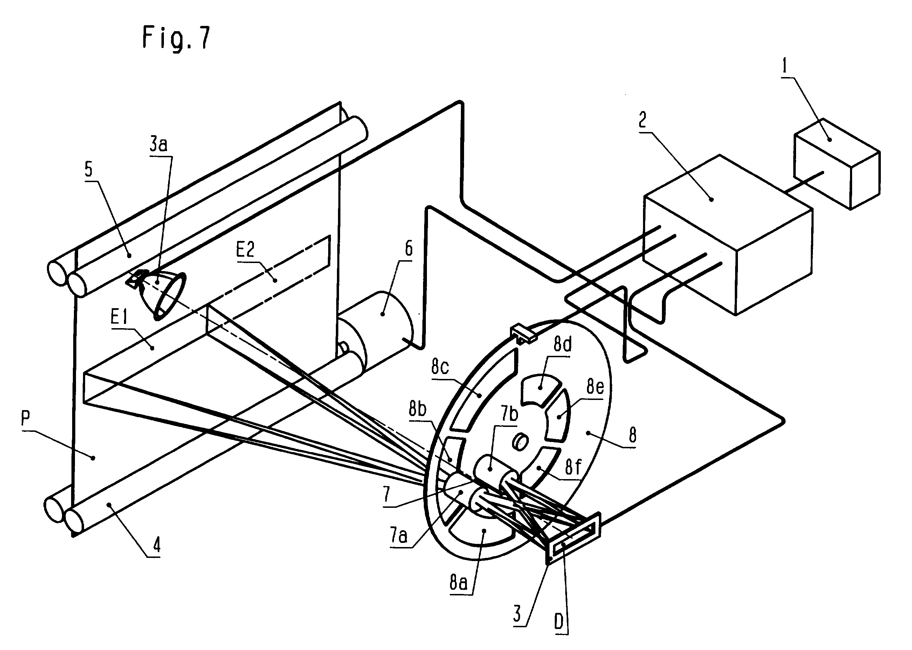

Für das folgende wird davon ausgegangen, dass die Vorlage, von der ein körperliches fotografisches Bild bzw. eine Kopie hergestellt werden soll, in elektronischer Form gespeichert vorliegt. Die sich aus der Gesamtheit aller Helligkeits- und Farbinformationen für jeden einzelnen Bildpunkt der zu kopierenden Vorlage zusammensetzende Bildinformation der Vorlage liegt dabei in einem Speicher 1, aus dem sie mittels einer Steuerung 2 bildpunktweise und ggf. nach Farbanteilen separiert abrufbar ist (Fig.7). Analog ist unter der Bildinformation eines streifenförmigen Abschnitts der Vorlage die Gesamtheit der Helligkeits- und Farbinformationen derjenigen Vorlagebildpunkte zu verstehen, die zu dem betreffenden streifenförmigen Abschnitt der Vorlage gehören.

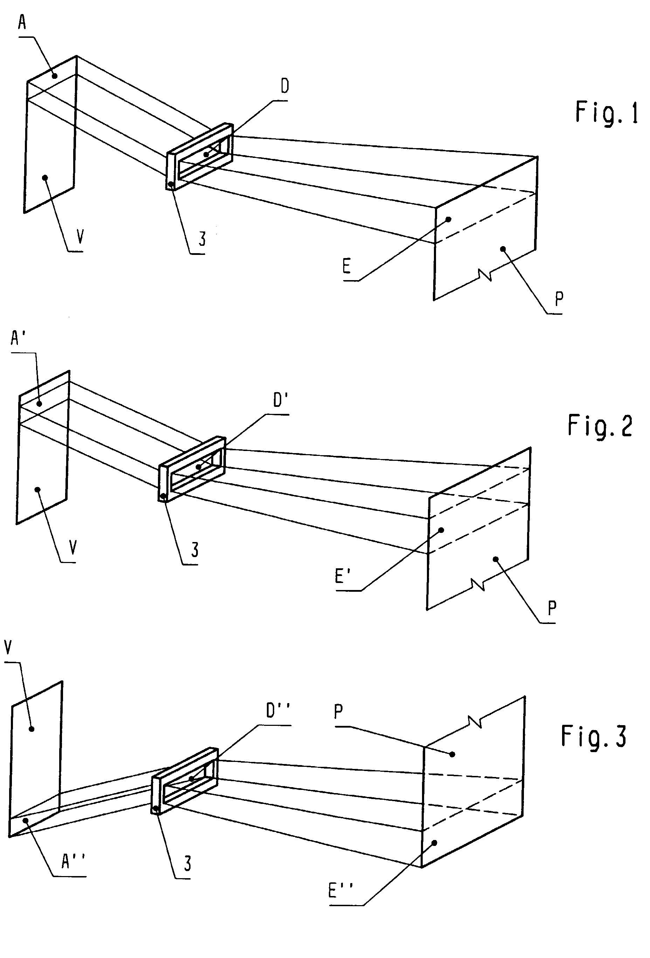

Die Figuren 1-3 verdeutlichen das Prinzip der zeilen- bzw. streifenförmigen Aufbelichtung. Die durch die Gesamtheit aller abgespeicherten Helligkeits- und Farbinformationen für jeden einzelnen ihrer Bildpunkte repräsentierte Vorlage ist mit V bezeichnet. Die hier nicht dargestellte Steuerung 2 liest die Bildinfomation eines ersten streifenförmigen Abschnitts A der Vorlage V aus und steuert damit ein pixelweise arbeitendes elektrooptisches Wandlerorgan 3 an, welches anhand der ihm zugeführten Signale eine bildmässige optische Darstellung D des streifenförmigen Abschnitts A erzeugt. Das elektrooptische Wandlerorgan 3 kann z.B. durch ein Leuchtdiodenfeld mit z.B. 1280 x 300 Einzeldioden oder vorzugsweise, wie weiter unten noch erläutert, durch ein digitales Mikrospiegelfeld mit einer entsprechenden oder grösseren Anzahl von Einzelspiegeln gebildet sein. Die vom elektrooptischen Wandlerorgan 3 erzeugte - ebenfalls streifenförmige - optische Darstellung D des streifenförmigen Abschnitts A der Vorlage V wird nun mittels einer hier nicht dargestellten Abbildungsoptik in einem (in diesem Beispiel ortsfesten) streifenförmigen Belichtungsbereich E aufein fotografisches Kopiermaterial P abgebildet und dabei auf dieses aufbelichtet (Fig.1). Daraufhin wird ein nächster streifenförmiger Abschnitt A' ausgelesen, davon eine optische Darstellung D' erzeugt und diese auf das gleichzeitig um eine entsprechende Weglänge relativ zum Belichtungsbereich E vorgeschobene Kopiermaterial P aufbelichtet (Fig.2). Das ganze wiederholt sich nun so lange, bis die gesamte Vorlage erfasst ist und der letzte streifenförmige Abschnitt A'' der Vorlage ausgelesen, davon eine optische Darstellung D'' erzeugt und diese auf das Kopiermaterial P aufbelichtet ist (Fig.3).

Wie man erkennt, liegen die streifenförmigen Abschnitte A der Vorlage nicht nebeneinander, sondern sie überlappen sich zu einem grossen Teil (quer zu ihrer Längsrichtung). Dies führt dazu, dass sich auch die auf das Kopiermaterial P aufbelichteten Streifen überlappen, das Kopiermaterial P also je nach Überlappungsgrad mehrfach belichtet wird. Dieser Mehrfachbelichtung wird dadurch Rechnung getragen, dass die Helligkeitswerte der einzelnen Bildpunkte der optischen Darstellungen D der Abschnitte A (ggf. farbselektiv) durch die Steuerung 2 entsprechend herabgesetzt werden, so dass die das Kopiermaterial in den jeweiligen Bildpunkten beaufschlagenden Kopierlichtmengen in der Summe wieder korrekt sind. Diese Belichtungsmethode ist unter der Bezeichnung TIG (Time Integration Grayscale) allgemein bekannt.

Bis hierher entspricht das erfindungsgemässe Verfahren dem Stand der Technik und bedarfsoweit keiner weiteren Erläuterung.

Wie man erkennt, entspricht die Länge der streifenförmigen, die gesamte Breite der Vorlage überdeckenden Abschnitte A der Länge (der nutzbaren Fläche) des elektrooptischen Wandlerorgans 3. Die Auflösung in Streifenlängsrichtung ist somit durch die Anzahl der einzelnen Pixel des Wandlerorgans 3 in Längsrichtung gegeben. Mit den heute kommerziell zur Verfügung stehenden Wandlerorganen (maximale Pixelanzahl in Längsrichtung etwa 1280) ist jedoch die erreichbare Auflösung bei grösseren Vergrösserungsmassstäben (grossformatige Bilder) in vielen Fällen qualitativ nicht ausreichend. Hier setzt nun die Erfindung an.

Gemäss dem grundlegendsten Gedanken der Erfindung werden die streifenförmigen Abschnitte der Vorlage in zwei oder mehrere, in Längsrichtung hintereinander liegende Teilabschnitte eingeteilt und von jedem Teilabschnitt wird mittels des elektrooptischen Wandlerorgans eine separate Darstellung erzeugt, welche die gesamte Länge des Wandlerorgans ausfüllt. Diese separaten Darstellungen werden mittels einer für diese Zwecke speziell ausgebildeten Abbildungsoptik lagerichtig in Längsrichtung hintereinander liegenden Teilbelichtungsstreifen auf das Kopiermaterial aufbelichtet, so dass die aufbelichteten Teilstreifen zusammen wieder die Bildinformation des aus den Teilabschnitten bestehenden streifenförmigen Abschnitts der Vorlage enthalten. Durch diese Aufteilung der streifenförmigen Vorlageabschnitte in zwei oder mehrere Teilabschnitte steht für jeden streifenförmigen Abschnitt der Vorlage ein Zwei- bzw. Mehrfaches der Pixelanzahl in Längsrichtung des Wandlerorgans zur Verfügung, so dass auch bei sehr grossformatigen Kopien (typischerweise bis zum Format 12"x18") eine ausreichend hohe Auflösung und damit hohe Bildqualität erreichbar ist.

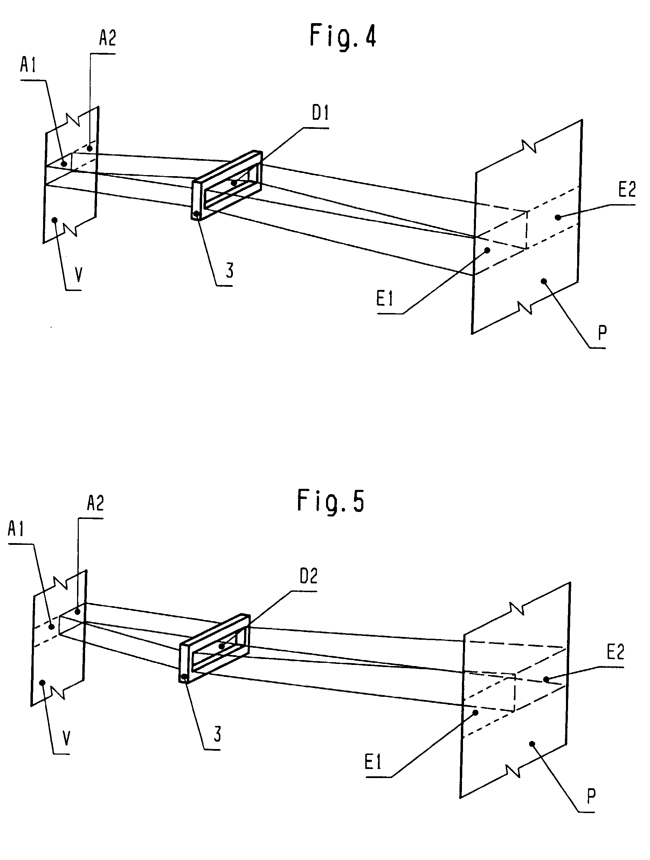

Die Figuren 4-5 veranschaulichen das Prinzip des erfindungsgemässen Verfahrens anhand eines Beispiels, bei dem jeder streifenförmige Abschnitt A der Vorlage V in zwei Teilabschnitte A1 und A2 eingeteilt wird. Fig.4 zeigt, wie aus dem Teilabschnitt A1 mittels des elektrooptischen Wandlerorgans 3 eine optische Darstellung D1 erzeugt und diese Darstellung in einem Teilbelichtungsbereich E1 auf das Kopiermaterial P aufbelichtet wird. Die Fig.5 zeigt dasselbe, jedoch für den Teilabschnitt A2, die entsprechende optische Darstellung D2 und den Teilbelichtungsbereich E2. Die Erzeugung der beiden Darstellungen D1 und D2 und die Aufbelichtung auf das Kopiermaterial erfolgt sequentiell.

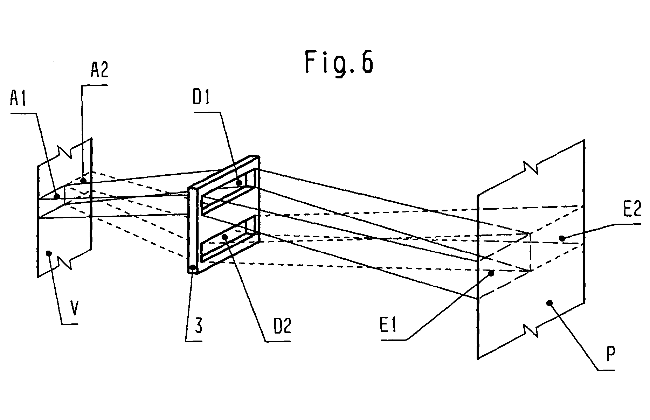

Die Figur 6 zeigt eine Variante des erfindungsgemässen Verfahrens, bei welcher ein etwas breiteres elektrooptisches Wandlerorgan 3 eingesetzt wird, so dass mittels desselben Wandlerorgans unter Ausnutzung verschiedener Pixelbereiche jeweils zwei streifenförmige Teilabschnitte der Vorlage gleichzeitig und örtlich parallel dargestellt werden können. Aus dem einen streifenförmigen Teilabschnitt A1 der Vorlage V wird die in der Zeichnung obere Darstellung D1 erzeugt, und aus dem anderen Teilabschnitt A2 die in der Zeichnung untere Darstellung D2, und diese beiden Darstellungen werden mittels einer hier nicht dargestellten, für diesen Zweck speziell ausgebildeten Abbildungsoptik gleichzeitig in zwei hintereinander liegenden streifenförmigen Teilbelichtungsbereichen E1 und E2 lagerichtig auf das Kopiermaterial P aufbelichtet.

Die Figur 7 zeigt ein praktisches Ausführungsbeispiel der erfindungsgemässen Vorrichtung. Zu erkennen sind der elektronische Speicher 1 für die zu kopierende Vorlage, die Steuerung 2, das elektrooptische Wandlerorgan 3 und das fotografische Kopiermaterial P, welches zwischen zwei Transportwalzenpaaren 4 und 5 in einer Belichtungsebene positioniert wird. Ein Antriebsmotor 6 treibt das Transportwalzenpaar 4 an und bildet zusammen mit diesem Antriebsmittel zur Verstellung des Kopiermaterials P relativ zum Belichtungsstrahlengang. Das elektrooptische Wandlerorgan 3 ist her als passiver Typ (z.B. in Form eines in Reflexion betriebenen Flüssigkristallzellenfelds) dargestellt, welcher mit einer Lichtquelle 3a zusammenarbeitet, deren Licht er entsprechend der ihm über die Steuerung 2 zugeführten Bildinformation moduliert, um so eine bildmässige Darstellung der ihm zugeführten Bildinformation zu erzeugen. Zwischen dem elektrooptischen Wandlerorgan 3 und der Belichtungsebene des Kopiermaterials P sind eine aus zwei separaten Objektiven 7a und 7b bestehende Abbildungsoptik 7 und ein von einem nicht gezeigten Antriebsmotor drehbar angetriebenes Filterrad 8 angeordnet, dessen Drehbewegung von der Steuerung 2 gesteuert wird. Die beiden Objektive 7a und 7b sind so ausgebildet und justiert, dass das eine Objektiv 7a die mittels des Wandlerorgans 3 erzeugten optischen Darstellungen von Teilabschnitten der Vorlage in dem in der Zeichnung linken Teilbelichtungsbereich E1 und das andere Objektiv 7b die Darstellungen in dem in der Zeichnung rechten Teilbelichtungsbereich E2 auf das Kopiermaterial P abbildet. Das Filterrad 8 besitzt zwei mal drei Farbfilter 8a, 8b, 8c und 8d, 8e,8f in den in der Farbfotografie üblichen additiven Grundfarben rot, blau und grün. Die Farbfilter sind längs zweier konzentrischer Spuren angeordnet, die je einem der beiden Objektive 7a und 7b zugeordnet sind. Bei jeder Umdrehung des Filterrads 8 werden somit zuerst nacheinander drei Farbfilter in den Strahlengang nach dem Objektiv 7a und dann drei Farbfilter in den Strahlengang nach dem Objektiv 7b eingeführt, wobei der Strahlengang des jeweils anderen Objektivs durch das gleichzeitig auch als Blende wirkende Filterrad 8 unterbrochen wird, so dass jeweils nur eines der beiden Objektive 7a und 7b aktiv ist. Während des Übergangs vom einen zum anderen Objektiv 7a bzw. 7b wird das elektrooptische Wandlerorgan 3 von der Steuerung 2 dunkelgesteuert. Selbstverständlich liesse sich die Farbfilter- und die Blendenfunktion auch durch entsprechende getrennte optische Mittel, z.B. rotierende oder schwenkbare Farbfilter und eine rotierende oder schwenkbare Sektorblende realisieren. Die Drehbewegung des Filterrads 8 ist über die Steuerung 2 mit der Auslesung der Bildinformation aus dem Speicher 1 synchronisiert. Pro ausgelesenem ganzen, hier in zwei Teilabschnitte eingeteilten streifenförmigen Abschnitt der Vorlage vollführt das Filterrad 8 (mindestens) eine vollständige Umdrehung, so dass in jedem Teilbelichtungsbereich E1 und E2 drei farbsequentielle Teilbelichtungen erfolgen.

Ein besonderer Vorteil der erfindungsgemässen Vorrichtung liegt darin, dass sie mit relativ geringem zusätzlichen Aufwand (gegenüber herkömmlichen Vorrichtungen dieser Art) realisiert werden kann. Es ist im wesentlichen lediglich eine spezielle Abbildungsoptik 7 erforderlich; für die Erzeugung der optischen Darstellungen der Teilabschnitte der Vorlage kann auf dieselben elektronischen Hardware-Komponenten zurückgegriffen werden, die auch bei den bekannten Vorrichtungen dieser Art verwendet werden. Es muss die Software, d.h. die Programmierung der üblicherweise mit einem Rechner ausgestatteten Steuerung 2 so abgewandelt werden, dass anstelle von ganzen Abschnitten jeweils nur Teilabschnitte der Vorlage ausgelesen und davon optische Darstellungen erzeugt werden. Diese Anpassung kann der Fachmann ohne erfinderisches Zutun in an sich bekannter Weise vornehmen und bedarf deshalb keiner besonderen Erläuterung.

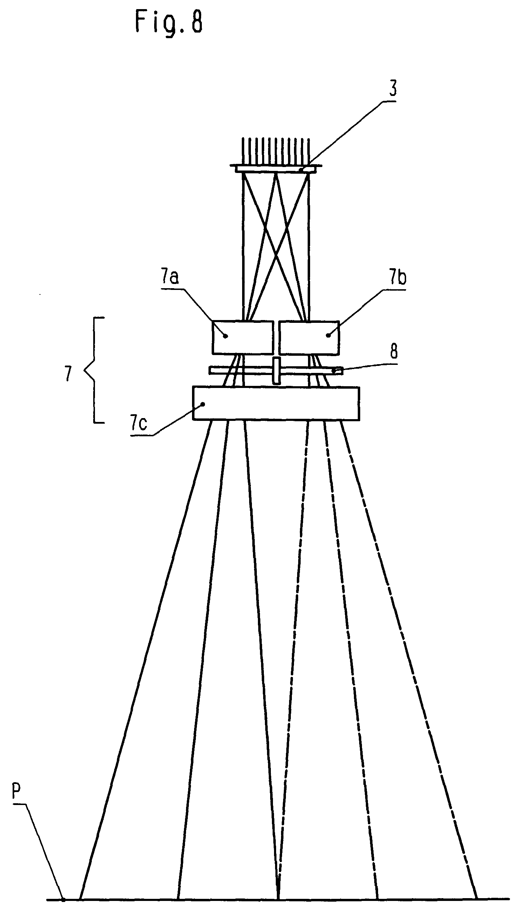

In Figur 8 ist eine besonders zweckmässige Ausgestaltung einer Abbildungsoptik 7 dargestellt. Sie besteht hier aus zwei kleineren, parallel zu einander angeordneten Objektiven 7a und 7b und einem grösseren Objektiv 7c, dessen Öffnung die Öffnungen der beiden anderen Objektive symmetrisch überdeckt. Das rotierende Filterrad 8 ist zwischen den beiden Objektiven 7a und 7b einerseits und dem Objektiv 7c anderseits angeordnet. Die beiden Objektive 7a und 7b bilden das Wandlerorgan 3 bzw. die von diesem erzeugten optischen Darstellungen nach Unendlich ab, während das Objektiv 7c für die Abbildung auf das Kopiermaterial P sorgt. Diese Aufteilung der Abbildungsoptik in drei Objektive hat den Vorteil, dass für eine Veränderung der Vergrösserung lediglich das grössere Objektiv 7c ausgewechselt oder verstellt werden muss, während die beiden anderen Objektive 7a und 7b zusammen mit dem Filterrad 8 ortsfest und unverändert bleiben, so dass die relativ aufwendige Justierung nur ein einziges Mal vorgenommen werden muss. Das Objektiv 7c kann auch als Zoom-Objektiv ausgebildet sein.

Die Abbildungsoptik 7 der Figur 8 kann auch eingesetzt werden, wenn mittels des Wandlerorgans 3 zwei parallele Darstellungen simultan erzeugt werden, wie dies in Figur 6 schematisch dargestellt ist. Die beiden Objektive 7a und 7b müssen dann so justiert sein, dass sie die beiden optischen Darstellungen in Längsrichtung hintereinander auf das Kopiermaterial abbilden. In diesem Fall muss nahe der Belichtungsebene, d.h. knapp vor dem Kopiermaterial eine Bildfeldblende angeordnet sein und die Blendenfunktion des Filterrads 8 wegfallen, so dass die beiden Objektive 7a und 7b nicht wechselweise sondern gleichzeitig aktiv sind.

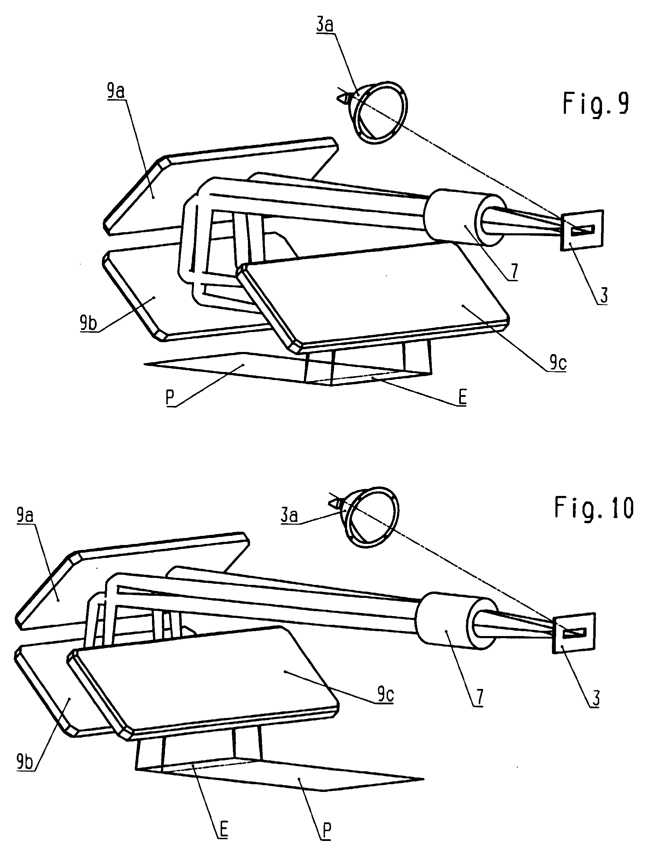

Wie schon erwähnt, ist es für die streifenweise Aufbelichtung erforderlich, dass eine Relativbewegung zwischen dem streifenförmigen Belichtungsbereich E und dem Kopiermaterial P erfolgt. Beim Ausführungsbeispiel gemäss der Figur 7 erfolgt dies durch einen entsprechenden Vorschub des Kopiermaterials P. Alternativ dazu und besonders zweckmässig kann die Relativbewegung auch durch eine bewegliche Ausbildung der Abbildungsoptik erreicht werden, wobei das Kopiermaterial während der gesamten Aufbelichtung ortsfest bleibt. Das Prinzip einer solchen beweglichen Abbildungsoptik ist in den Figuren 9 und 10 gezeigt, wobei der Einfachheit halber die zwei bzw. drei Objektive 7a, 7b bzw. 7a-c der Figuren 7 und 8 stellvertretend durch ein einziges Objektiv 7 dargestellt sind.

Die Beweglichkeit der Abbildungsoptik bzw. die Relativbewegung des Belichtungsstreifens E relativ zum Kopiermaterial P wird durch drei in den Strahlengang zwischen dem Objektiv 7 und dem Kopiermaterial P eingefügte Umlenkspiegel 9a, 9b und 9c erreicht, welche parallel zur Ebene des Kopiermaterials P in Richtung senkrecht zur Längsrichtung des Belichtungsstreifens E durch nicht gezeigte Antriebsmittel verschiebbar angeordnet sind. Die beiden Umlenkspiegel 9a und 9b sind relativ zu einander ortsfest und stehen im rechten Winkel zu einander, so dass sie den Strahlengang uni 180° umlenken. Der Umlenkspiegel 9c ist parallel zum Umlenkspiegel 9b angeordnet und lenkt den Strahlengang um 90° um auf das Kopiermaterial. Der Umlenkspiegel 9c bewegt sich in die gleiche Richtung wie die beiden Umlenkspiegel 9a und 9b, aber mit der doppelten Geschwindigkeit, so dass die optische Weglänge zwischen dem Objektiv 7 und dem Kopiermaterial P unabhängig von der Stellung der Umlenkspiegel konstant bleibt. Durch die Bewegung der Umlenkspiegel in der beschriebenen Weise wird der streifenförmige Belichtungsbereich E über das Kopiermaterial bewegt. Die Figur 9 zeigt den Belichtungsbereich E und die Umlenkspiegel in der einen Endstellung, die Figur 10 in der anderen Endstellung.

Selbstverständlich kann die erforderlich Relativbewegung auch durch eine entsprechende Verstellung der gesamten Abbildungsoptik (inklusive Wandlerorgan) erfolgen.

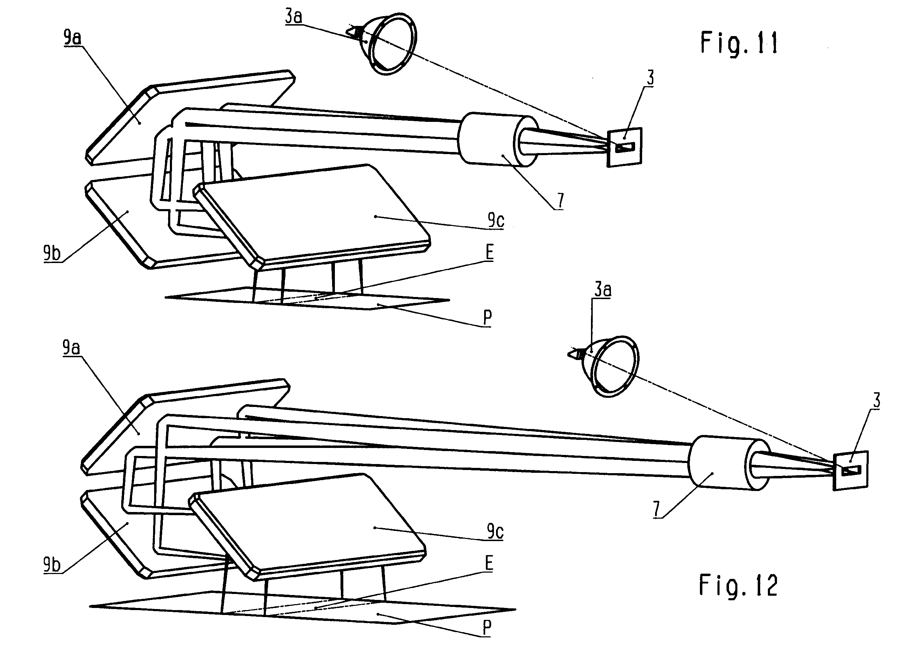

Die Figuren 11 und 12 veranschaulichen, wie mit einer beweglichen Abbildungsoptik gemäss den Figuren 9 und 10 die Vergrösserung des Abbildungssystems verstellt werden kann. Wie man erkennt, braucht dazu lediglich einerseits der Abstand zwischen dem Objektiv 7 und dem elektrooptischen Wandlerorgan 3 und anderseits die optische Weglänge zwischen Objektiv 7 und Kopiermaterial P verändert zu werden. Die Figuren 11 und 12 zeigen die Umlenkspiegel und das Objektiv bei zwei verschiedenen Einstellungen des Vergrösserungsmassstabs. Selbstverständlich kann die Vergrösserung auch auf andere Weise verstellt werden, beispielsweise etwa durch Veränderung des Abstands zwischen dem Umlenkspiegel 9c und dem Kopiermaterial P und durch entsprechende Verstellung des Objektivs 7.

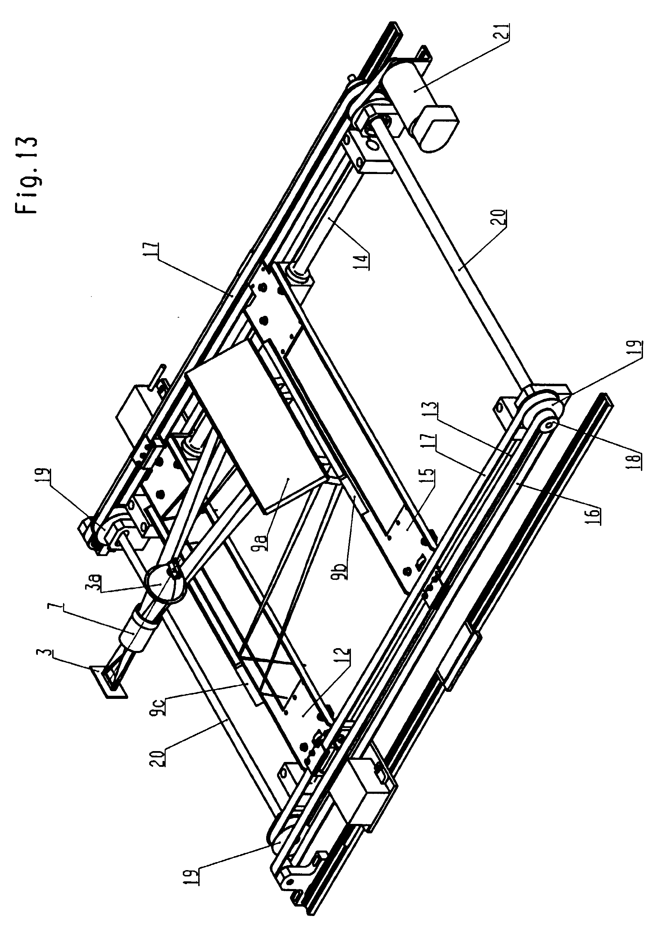

Die Figur 13 zeigt, wie eine Abbildungsanordnung gemäss den Figuren 9 und 10 praktisch realisiert werden kann. In einem nicht gezeigten Geräterahmen sind zwei Führungsstangen 13 und 14 befestigt, auf denen zwei Spiegelschlitten 12 und 15 beweglich und parallel zueinander angeordnet sind. Auf dem Spiegelschlitten 12 ist der Umlenkspiegel 9c, auf dem Spiegelschlitten 15 sind die beiden Umlenkspiegel 9a und 9b montiert. Zu beiden Seiten der beiden Spiegelschlitten 12 und 15 sind je zwei Transportriemen 16 bzw. 17 zwischen je zwei Riemenscheibenpaaren 18 bzw. 19 aufgespannt. Die Riemenscheiben 18 und 19 sitzen paarweise auf gemeinsamen Antriebswellen 20 und werden von einem von der hier nicht dargestellten Steuerung 2 gesteuerten Antriebsmotor 21 synchron angetrieben. Die den Transportriemen 16 zugeordneten Riemenscheiben 18 besitzen exakt den halben Durchmesser der den Transportriemen 17 zugeordneten Riemenscheiben 19. An den Transportriemen 17 ist der erste Spiegelschlitten 12 befestigt, an den Transportriemen 16 der zweite Spiegelschlitten 15. Somit können die auf den Spiegelschlitten 12 und 15 montierten Umlenkspiegel 9c bzw. 9a und 9b mittels des Antriebsmotors 21 parallel zu den Führungsstangen 13 und 14 verstellt werden, wobei sich der Umlenkspiegel 9c zwangsläufig stets mit der doppelten Geschwindigkeit der beiden Umlenkspiegel 9a und 9b bewegt.

Selbstverständlich ist es im Rahmen der Erfindung auch möglich, die streifenförmigen Abschnitte A der Vorlage auch in mehr als zwei Teilabschnitte A1, A2, A3 ... einzuteilen, wobei dann entsprechend mehrere Objektive für die Abbildung vorgesehen sind und die übrigen Komponenten entsprechend angepasst werden müssten.

In den vorstehenden Beispielen grenzen die Teilbelichtungsbereiche E1, E2 ... jeweils nahtlos an einander. Um die ganze Anordnung weniger empfindlich auf Justierungsfehler zu machen, kann es von Vorteil sein, die Teilbelichtungsbereiche (und die zugrundeliegenden Teilabschnitte der Vorlage) etwas zu überlappen, beispielsweise um etwa 1-50 Pixel. Wegen der sich dadurch ergebenden Doppelbelichtung im Überlappungsbereich ist eine entsprechende Korrektur (Reduktion der Helligkeit) der mittels des Wandlerorgans erzeugten Darstellungen der Teilabschnitte der Vorlage in den Überlappungsbereichen erforderlich. Beispielsweise kann dazu die Helligkeit der Bildpunkte in den Überlappungsbereichen von innen nach aussen linear auf null reduziert werden.

Als elektrooptisches Wandlerorgan 3 kann im Prinzip jeder beliebige pixelweise arbeitende, aktive oder passive Typ eingesetzt werden. Beispiele dafür sind, wie schon erwähnt, Katodenstrahlröhren, Leuchtdiodenfelder, Elektroluminiszenzfelder oder Flüssigkristallfelder. Ganz besonders vorteilhaft sind jedoch sogenannte digitale Mikrospiegelfelder (DMD = Digital Mirror Device), wie sie z.B. auch in Grossbildprojektionsgeräten verwendet werden. Ein typisches, für die Zwecke der Erfindung geeignetes digitales Mikrospiegelfeld umfasst auf einem Chip eine Anordnung von 1280 x 1024 Spiegeln, die durch elektrische Ansteuerung selektiv zwischen zwei definierten Kippstellungen hin und her geschwenkt werden können. Für die Zwecke der vorliegenden Erfindung wird beispielsweise nur ein 1280x300 Einzelspiegel umfassender streifenförmiger Bereich des Mikrospiegelfelds ausgenützt.

Solche Mikrospiegelfelder werden naturgemäss in Refexion betrieben, sind also passiv. Sie werden im praktischen Einsatz so vor der Pupille eines Abildungsobjektiv angeordnet, dass die Mikrospiegel das sie beaufschlagende Licht in der einen Kippstellung in das Abbildungsobjektiv und in der anderen Kippstellung an der Pupille des Abbildungsobjektivs vorbei lenken. Die Intensitätsmodulation des reflektierten Lichts erfolgt dabei durch intermittierende Ansteuerung der Mikrospiegel mit entsprechendem Tastverhältnis. Aufbau, Ansteuerungstechniken und Anwendungsmöglichkeiten solcher digitaler Milcrospiegelfelder sind in den einschlägigen Publikationen der Herstellerfimen, z.B. der Firma Texas Instruments, Houston, Texas, USA, im Detail beschrieben und sind nicht Gegenstand der vorliegenden Erfindung.

## Patentansprüche

1. Verfahren zur Herstellung eines fotografischen Bilds, insbesondere einer Kopie von einer in elektronischer Form vorliegenden Vorlage durch streifenweises Aufbelichten der Bildinformation der Vorlage aufein fotografisches Kopiermaterial, wobei mittels eines elektrooptischen, pixelweise arbeitenden Wandlerorgans (3) nacheinander von wechselnden streifenförmigen Abschnitten (A) der Vorlage (V) optische Darstellungen (D) erzeugt und diese optischen Darstellungen (D) in einem streifenförmigen Belichtungsbereich (E) auf das Kopiermaterial (P) abgebildet werden, und wobei der streifenförmige Belichtungsbereich (E) und das Kopiermaterial (P) im wesentlichen mit konstanter Geschwindigkeit in Richtung quer zur Längserstreckung des streifenförmigen Belichtungsbereichs (E) relativ zu einander bewegt werden, so dass sukzessive die Bildinformation der ganzen Vorlage auf die gesamte zur Verfügung stehende Fläche des Kopiermaterials (P) aufbelichtet wird, dadurch gekennzeichnet, dass jeder streifenförmige Abschnitt (A) der Vorlage (V) in mindestens zwei in Längsrichtung des Abschnitts (A) hintereinander liegende streifenförmige Teilabschnitte (A1,A2) eingeteilt wird, dass von den Teilabschnitten (A1,A2) mittels des elektrooptischen Wandlerorgans (3) getrennte optische Darstellungen (D1,D2) erzeugt werden, und dass diese getrennten optischen Darstellungen (D1,D2) der Teilabschnitte (A1,A2) in mindestens zwei in Längsrichtung hintereinander liegenden streifenförmigen, zusammen den streifenförmigen Belichtungsbereich (E) bildenden Teilbelichtungsbereichen (E1,E2) auf das Kopiermaterial (P) abgebildet werden.

2. Verfahren nach Anspruch 1, dadurch gekennzeichnet, dass die optischen Darstellungen (D1,D2) der Teilabschnitte (A1,A2) mittels separater Objektive (7a,7b) in die Teilbelichtungsbereiche (E1,E2) abgebildet werden.

3. Verfahren nach Anspruch 1 oder 2, dadurch gekennzeichnet, dass die optischen Darstellungen (D1,D2) der Teilabschnitte (A1,A2) der Vorlage sequentiell erzeugt und auf das Kopiermaterial (P) abgebildet werden.

4. Verfahren nach Anspruch 1 oder 2, dadurch gekennzeichnet, dass die optischen Darstellungen (D1,D2) der Teilabschnitte (A1,A2) der Vorlage örtlich parallel zu einander erzeugt und simultan auf das Kopiermaterial (P) abgebildet werden.

5. Verfahren nach einem der vorangehenden Ansprüche, dadurch gekennzeichnet, dass die Erzeugung der optischen Darstellungen (D1,D2) der Teilabschnitte (A1,A2) und die Abbildung der optischen Darstellungen (D1,D2) auf das Kopiermaterial (P) farbsequentiell erfolgen.

6. Verfahren nach einem der vorangehenden Ansprüche, dadurch gekennzeichnet, dass die Relativbewegung zwischen den streifenförmigen Teilbelichtungsbereichen (E1,E2) und dem Kopiermaterial (P) mittels einer beweglichen Abbildungsoptik (7,9a-c) erfolgt.

7. Verfahren nach Anspruch 6, dadurch gekennzeichnet, dass das elektrooptische Wandlerorgan (3) und das Kopiermaterial (P) ortsfest gehalten werden und dass die Teilbelichtungsbereiche (E1,E2) mittels einer parallel zum Kopiermaterial beweglichen Spiegelanordnung (9a,9b,9c) relativ zum Kopiermaterial bewegt werden

8. Verfahren nach einem der vorangehenden Ansprüche, dadurch gekennzeichnet, dass die Erzeugung der optischen Darstellungen (D1,D2) der streifenförmigen Teilabschnitte (A1,A2) der Vorlage mittels eines digitalen Mikrospiegelfelds erfolgt.

9. Verfahren nach einem der vorangehenden Ansprüche, dadurch gekennzeichnet, dass die Teilbelichtungsbereiche (E1,E2) teilweise überlappend angeordnet werden, wobei die Helligkeit von mittels des Wandlerorgans (3) dargestellten Bildpunkten, die zu den Überlappungsbereichen gehören, gegen aussen hin zunehmend auf null reduziert wird, so dass die sich durch die Überlappung ergebende Doppelbelichtung kompensiert wird.

10. Vorrichtung zur Herstellung eines fotografischen Bilds, insbesondere einer Kopie von einer in elektronischer Form vorliegenden Vorlage durch streifenweises Aufbelichten der Bildinformation der Vorlage auf ein fotografisches Kopiermaterial, mit einem Speicher (1) für die Aufnahme der Bildinformation der Vorlage (V), mit einem pixelweise arbeitenden elektrooptischen Wandlerorgan (3) und einer zugeordneten Steuerung (2) zur Erzeugung einer optischen Darstellung (D) von streifenförmigen Abschnitten (A) der im Speicher (1) abgespeicherten Vorlage (V), mit einer Abbildungsoptik (7) zum Abbilden der optischen Darstellungen (D) der streifenförmigen Abschnitte (A) in einem streifeniförmigen Belichtungsbereich (E) auf das Kopiermaterial (P), und mit Antriebsmitteln (4-6), um den streifenförmigen Belichtungsbereich (E) und das Kopiermaterial (P) im wesentlichen mit konstanter Geschwindigkeit in Richtung quer zur Längserstreckung des streifenförmigen Belichtungsbereichs (E) relativ zu einander zu bewegen, dadurch gekennzeichnet, dass die Steuerung (2) jeden streifenförmigen Abschnitt (A) der abgespeicherten Vorlage (V) in mindestens zwei in Längsrichtung hintereinander liegende streifenförmige Teilabschnitte (A1,A2) einteilt und mittels des elektrooptischen Wandlerorgans (3) von diesen Teilabsehnitten (A1,A2) getrennte optische Darstellungen (D1,D2) erzeugt, und dass die Abbildungsoptik (7) diese getrennten optischen Darstellungen (D1,D2) der Teilabschnitte (A1,A2) in mindestens zwei in Längsrichtung hintereinander liegenden streifenförmigen, zusammen den streifenförmigen Belichtungsbereich (E) bildenden Teilbelichtungsbereichen (E1,E2) auf das Kopiermaterial (P) abbildet.

11. Vorrichtung nach Anspruch 10, dadurch gekennzeichnet, dass die Abbildungsoptik (7) separate Objektive (7a,7b) für die Abbildung der getrennten Darstellungen (D1,D2) der Teilabschnitte (A1,A2) der Vorlage (V) in die Teilbelichtungsbereiche (E1,E2) umfasst.

12. Vorrichtung nach Anspruch 10 oder 11, dadurch gekennzeichnet, dass die Steuerung (2) die getrennten optischen Darstellungen (D1,D2) der Teilabschnitte (A1,A2) der Vorlage (V) mittels des elektrooptischen Wandlerorgans (3) sequentiell erzeugt und dass die Abbildungsoptik (7) die getrennten optischen Darstellungen (D1,D2) sequentiell auf das Kopiermaterial (P) abbildet.

13. Vorrichtung nach Anspruch 10 oder 11, dadurch gekennzeichnet, dass die Steuerung (2) die getrennten optischen Darstellungen (D1,D2) der Teilabschnitte (A1,A2) der Vorlage (V) mittels des elektrooptischen Wandlerorgans (3) örtlich parallel zu einander erzeugt und die Abbildungsoptik (7) die getrennten optischen Darstellungen (D1,D2) simultan auf das Kopiermaterial (P) abbildet.

14. Vorrichtung nach einem der Ansprüche 10-13, dadurch gekennzeichnet, dass die Steuerung (2) die getrennten optischen Darstellungen (D1,D2) der Teilabschnitte (A1,A2) der Vorlage (V) mittels des elektrooptischen Wandlerorgans (3) farbsequentiell erzeugt und die Abbildungsoptik (7) die getrennten optischen Darstellungen (D1,D2) der Teilabschnitte (A1,A2) farbsequentiell auf das Kopiermaterial (P) abbildet.

15. Vorrichtung nach einem der Ansprüche 10-14, dadurch gekennzeichnet, dass die Abbildungsoptik (7,9a-c) bewegliche Komponenten (9a-c) umfasst, um die Relativbewegung zwischen den streifenförmigen Teilbelichtungsbereichen (E1,E2) und dem Kopiermaterial (P) zu erzeugen.

16. Vorrichtung nach Anspruch 15, dadurch gekennzeichnet, dass die beweglichen Komponenten drei Umlenkspiegel (9a,9b,9c) umfassen, die parallel zum Kopiermaterial (P) senkrecht zur Längsrichtung der streifenförmigen Teilbelichtungsbereiche (E1,E2) linear beweglich angetrieben sind, wobei ein erster und ein zweiter Umlenkspiegel (9a,9b) in fester gegenseitiger räumlicher Zuordnung stehen und den Abbildungsstrahlengang um 180° umlenken und wobei ein dritter Umlenkspiegel (9c) antiparallel zum zweiten Umlenkspiegel (9b) angeordnet ist und den Strahlengang senkrecht auf das Kopiermaterial (P) lenkt, und wobei Antriebsmittel (16-21) vorgesehen sind, um den dritten Umlenkspiegel (9c) mit der doppelten Geschwindigkeit des ersten und zweiten Umlenkspiegels (9a,9b) zu bewegen.

17. Vorrichtung nach einem der Ansprüche 10-16, dadurch gekennzeichnet, dass das elektrooptische Wandlerorgan (3) ein digitales Mikrospiegelfeld umfasst.

18. Vorrichtung nach einem der Ansprüche 10-17, dadurch gekennzeichnet, dass die Abbildungsoptik (7) die streifenförmigen Teilbelichtungabereiche (E1,E2) teilweise überlappend anordnet, und dass die Steuerung (2) die Helligkeit derjenigen Bildpunkte der jeweils mittels des Wandlerorgans (3) dargestellten Teilabschnitte (A1,A2) der Vorlage (V), welche den Überlappungsbereichen angehören, gegen aussen hin zunehmend auf null reduziert, so dass die sich durch die Überlappung ergebende Doppelbelichtung kompensiert wird.
